# EUROPEAN PATENT APPLICATION

(11) **EP 4 417 936 A1**
(43) Date of publication of application: **21.08.2024**
(21) Application number: 24158542.1
(22) Date of filing: 20.02.2024
(51) Int. Cl.: G01B 11/25, G06T 7/521

(54) **3-DIMENSIONAL MEASUREMENT APPARATUS AND 3-DIMENSIONAL MEASUREMENT METHOD**

(30) Priority: 20.02.2023 JP 2023023945
(71) Applicant: JUKI Corporation, Tama-shi, Tokyo 206-8551 (JP)
(72) Inventor: SENGA, Daisuke, Tokyo, 206-8551 (JP)
(74) Representative: Hoeger, Stellrecht & Partner Patentanwälte mbB

(57) **Abstract**

A 3-dimensional measurement apparatus includes: a projection device configured to project a stripe pattern of a sinusoidal brightness distribution to an object; an imaging device configured to image the object to which the stripe pattern is projected; and a control device configured to control the projection device and the imaging device. The control device includes a pattern generation unit, an image data acquisition unit, a phase value calculation unit, a collation unit, and a 3-dimensional shape calculation unit. The collation unit collates a first phase value with a second phase value and specifies noise. The 3-dimensional shape calculation unit calculates a 3-dimensional shape of an object based on the first phase value in which the noise is determined not to be contained.

## Description

### TECHNICAL FIELD

A technology disclosed in the present application relates to a 3-dimensional measurement apparatus and a 3-dimensional measurement method.

### BACKGROUND ART

Phase shift methods are known as techniques for measuring 3-dimensional shapes of objects. In phase shift methods, stripe patterns of sinusoidal brightness distributions are projected to objects by projection devices, and the objects to which the stripe patterns are projected are imaged by imaging devices. In the stripe patterns projected to the surface of the objects in accordance with the shapes of the surfaces of the objects, distortion (phase shift) occurs. Therefore, 3-dimensional shapes of the objects are measured by analyzing stripe patterns on the surfaces of the objects imaged by the imaging devices.

The projection devices irradiate the surfaces of the objects with light of the stripe patterns. Not only primary reflected light but also secondary reflected light are likely to be incident on the imaging devices. The primary reflected light is light reflected once from the surface of a measurement target object. The secondary reflected light is light reflected twice or more from the surface of a measurement target object or the surface of another object. The secondary reflected light has an adverse influence on analysis of a stripe pattern due to the secondary reflected light is superimposed as noise on a stripe pattern projected to the surface of an object. Therefore, when secondary reflected light is incident on an imaging device, measurement accuracy of a 3-dimensional shape of an object is likely to deteriorate. A phenomenon causing deterioration in the measurement accuracy of the 3-dimensional shape due to the secondary reflected light is called secondary reflection or multiple reflection. Patent Literature 1 discloses a technique aimed to reduce an influence of multiple reflection and improve measurement accuracy in a method of measuring a 3-dimensional shape based on a phase of a pattern projected to a measurement target.

### CITATION LIST

### PATENT LITERATURE

Patent Literature 1: JP2018-146449A

### SUMMARY OF INVENTION

### TECHNICAL PROBLEM

Various techniques for inhibiting deterioration in measurement accuracy of a 3-dimensional shape caused due to secondary reflection have been proposed, including the technique disclosed in Patent Literature 1. However, there is room for improving such techniques.

An object of a technique disclosed in the present application is to inhibit deterioration in measurement accuracy of a 3-dimensional shape caused due to secondary reflection.

### SOLUTION TO PROBLEM

The present application discloses a 3-dimensional measurement apparatus. The 3-dimensional measurement apparatus includes: a projection device configured to project a stripe pattern of a sinusoidal brightness distribution to an object; an imaging device configured to image the object to which the stripe pattern is projected; and a control device configured to control the projection device and the imaging device. The control device includes a pattern generation unit that generates a first stripe pattern formed by a plurality of the stripe patterns subjected to phase shift by a predetermined shift amount from a first reference angle and a second stripe pattern formed by a plurality of the stripe patterns subjected to phase shift by the shift amount from a second reference angle, an image data acquisition unit that acquires first image data indicating an image of the object to which the first stripe pattern is projected and second image data indicating an image of the object to which the second stripe pattern is projected, a phase value calculation unit that calculates a first phase value indicating a phase value of each of a plurality of pixels of the first image data and a second phase value indicating a phase value of each of a plurality of pixels of the second image data, a collation unit that collates the first phase value with the second phase value and specifies noise, and a 3-dimensional shape calculation unit that calculates a 3-dimensional shape of the object based on the first phase value in which the noise is determined not to be contained.

### ADVANTAGEOUS EFFECTS OF INVENTION

According to the technique disclosed in the present application, it is possible to inhibit deterioration in measurement accuracy of a 3-dimensional shape caused due to secondary reflection.

### BRIEF DESCRIPTION OF DRAWINGS

FIG. 1 is a diagram schematically illustrating a 3-dimensional measurement apparatus according to an embodiment.
FIG. 2 is a functional block diagram illustrating a control device according to the embodiment.
FIG. 3 is a flowchart illustrating a 3-dimensional measurement method according to the embodiment.
FIG. 4 is a diagram illustrating a first stripe pattern according to the embodiment.
FIG. 5 is a diagram illustrating a first phase value according to the embodiment.
FIG. 6 is a diagram illustrating a second stripe pattern according to the embodiment.
FIG. 7 is a diagram illustrating a second phase value according to the embodiment.
FIG. 8 is a diagram illustrating a difference between the first and second phase values according to the embodiment.
FIG. 9 is a diagram illustrating noise specified by a collation unit according to the embodiment.

### DESCRIPTION OF EMBODIMENTS

Hereinafter, an embodiment will be described with reference to the drawings. Constituent elements according to the embodiment to be described below can be appropriately combined. Some of the elements are not used in some cases.

In the following description, an XYZ rectangular coordinate system is set and a positional relation between units will be described with reference to the XYZ rectangular coordinate system. A direction parallel to the X axis of a predetermined plane is referred to as an X axis direction, a direction parallel to the Y axis of the predetermined plane orthogonal to the X axis is referred to as a Y axis direction, and a direction parallel to the Z axis orthogonal to the predetermined plane is referred to as a Z axis direction. A rotational or slope direction centering on the X direction is referred to as a θX direction, a rotational or slope direction centering on the Y direction is referred to as a θY direction, and a rotational or slope direction centering on the Z direction is referred to as a θZ direction. An XY plane is the predetermined plane.

### 3-Dimensional Measurement Apparatus

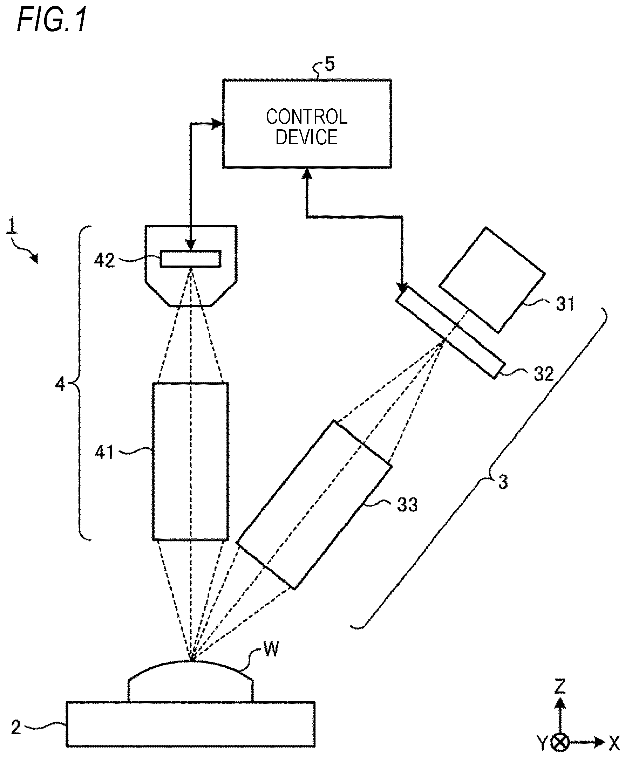

FIG. 1 is a diagram schematically illustrating a 3-dimensional measurement apparatus 1 according to an embodiment. As illustrated in FIG. 1, the 3-dimensional measurement apparatus 1 includes a stage 2 that holds an obj ect W which is a measurement target, a projection device 3 that projects a pattern to the object W held by the stage 2, an imaging device 4 that images the object W to which the pattern is projected, and a control device 5 that controls the projection device 3 and the imaging device 4.

The projection device 3 includes a light source 31 that generates light, a light modulation element 32 that modulates light emitted from the light source 31, and a projection optical system 33 that projects the pattern generated by the light modulation element 32 to the object W.

The light modulation element 32 includes a digital mirror device (DMD). The light modulation element 32 may be a transmissive liquid crystal panel or may be a reflective liquid crystal panel. The light modulation element 32 generates light of a pattern based on pattern data output from the control device 5. The projection device 3 irradiates the object W with light patterned based on the pattern data.

The imaging device 4 includes an imaging optical system 41 that forms light reflected from the object W as an image and an image sensor 42 that acquires image data of the object W via the imaging optical system 41. The image sensor 42 is a solid-state image sensor that includes a complementary metal oxide semiconductor image sensor (CMOS image sensor) or a charge coupled device image sensor (CCD image sensor).

The control device 5 includes a computer system and controls the projection device 3 and the imaging device 4. The control device 5 includes an arithmetic processing device including a processor such as a central processing unit (CPU) and a memory and a storage such as a read only memory (ROM) or a random access memory (RAM). The arithmetic processing device performs an arithmetic process in accordance with a computer program stored in the storage device.

In the embodiment, the 3-dimensional measurement apparatus 1 measures a 3-dimensional shape of the object W based on a phase shift method. The projection device 3 projects a stripe pattern of a sinusoidal brightness distribution to the object W while performing phase shift based on the phase shift method. The imaging device 4 images the obj ect W to which the stripe pattern is projected.

### Control Device

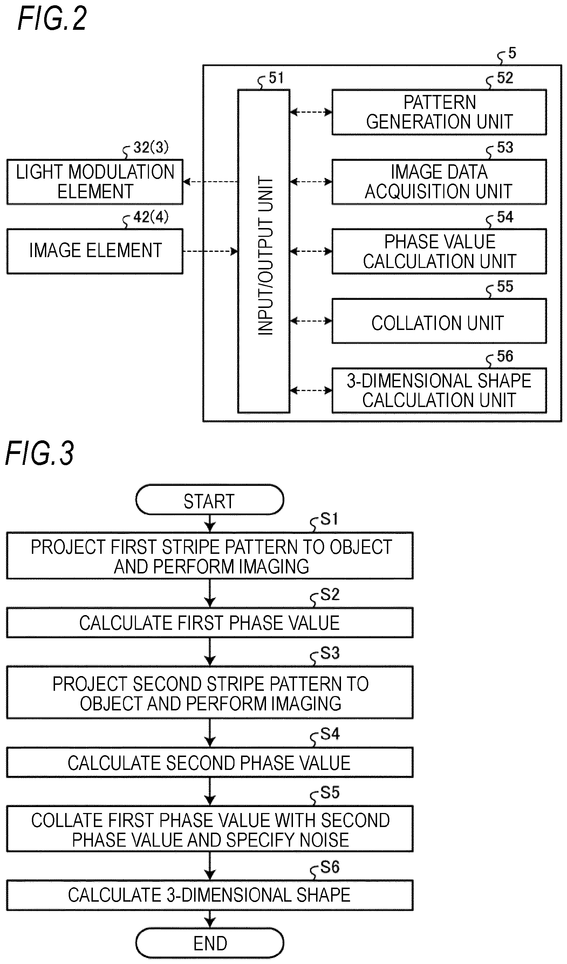

FIG. 2 is a functional block diagram illustrating the control device 5 according to the embodiment. The control device 5 includes an input/output unit 51, a pattern generation unit 52, an image data acquisition unit 53, a phase value calculation unit 54, a collation unit 55, and a 3-dimensional shape calculation unit 56.

The pattern generation unit 52 generates a stripe pattern which is projected to the object W. Pattern data related to the stripe pattern generated by the pattern generation unit 52 is output to the light modulation element 32 via the input/output unit 51. The projection device 3 projects the stripe pattern generated by the pattern generation unit 52 to the object W. In the embodiment, the pattern generation unit 52 generates a first stripe pattern for calculating a height of the surface of the object W and a second stripe pattern for determining noise.

The first stripe pattern is formed by a plurality of stripe patterns subjected to phase shift by a predetermined shift amount from a first reference angle. The second stripe pattern is formed by the plurality of stripe patterns subjected to phase shift by the predetermined shift amount from a second reference angle different from the first reference angle. In the following description, a difference between the first and second reference angles is appropriately referred to as an advance angle difference.

In the embodiment, the first stripe pattern is formed by four stripe patterns for which the first reference angle is 0 degrees and the shift amount is 90 degrees. The second stripe pattern is formed by four stripe patterns for which the second reference angle is 45 degrees and the shift amount is 90 degrees. That is, an advance angle difference indicating a difference between the first and second reference angles is 45 degrees. In the embodiment, the advance angle difference indicating the difference between the first and second reference angles is 1/2 of the shift amount.

The image data acquisition unit 53 acquires the image data from the image sensor 42 via the input/output unit 51. In the embodiment, the image data acquisition unit 53 quires first image data indicating an image of the object W to which the first stripe pattern is projected and second image data indicating an image of the object W to which the second stripe pattern is projected.

Based on luminance of the same points of a plurality of pieces of image data indicating an image of the object W to which each of the stripe patterns subjected to the phase shift is projected, the phase value calculation unit 54 calculates a phase value (phase deviation) of pixels of the image data corresponding to the points. Based on luminance of each of the plurality of pieces of image data, the phase value calculation unit 54 calculates the phase value of each of a plurality of pixels of the image data. In the embodiment, the phase value calculation unit 54 calculates a first phase value indicating a phase value of each of the plurality of pixels of the first image data. The phase value calculation unit 54 calculates a second phase value indicating a phase value of each a plurality of pixels of the second image data.

The collation unit 55 collates the first phase value with the second phase value and specifies noise caused due to secondary reflection. The collation unit 55 collates the first and second phase values of the same pixels of the first image data and the second image data and specifies pixels containing noise among the plurality of pixels of the first image data.

An advance angle phase value indicating a phase value obtained by advancing the first phase value by a predetermined advance angle difference can be estimated. When noise is not provided in each of the plurality of pixels, an advance angle phase value obtained by advancing the first phase value by 45 degrees matches the second phase value. Accordingly, when there is a pixel in which the advance angle phase value does not match the second phase value, the collation unit 55 can determine that noise is contained in the pixel in which the advance angle phase value does not match the second phase value.

In the embodiment, the collation between the first and second phase values includes calculation of a difference between the first and second phase values of same pixels of the first image data and the second image data. When noise is not contained in each of the plurality of pixels, a difference between the first and second phase values is a constant value in each of the plurality of pixels. When there is a pixel in which the difference between the first and second phase values is an abnormal value, the collation unit 55 can determine that noise is contained in the pixel indicating that the difference is an abnormal value.

The 3-dimensional shape calculation unit 56 calculates height data of each of a plurality of points on the object W corresponding to each of a plurality of pixels of the first image data based on the first phase value of each of the plurality of pixels of the first image data and calculates a 3-dimensional shape of the object W. The 3-dimensional shape calculation unit 56 calculates the 3-dimensional shape of the object W based on the first phase value of the pixel in which the noise is determined not to be contained.

### 3-Dimensional Measurement Method

Next, a 3-dimensional measurement method according to the embodiment will be described. FIG. 3 is a flowchart illustrating the 3-dimensional measurement method according to the embodiment.

The pattern generation unit 52 generates the first stripe pattern. In the embodiment, the pattern generation unit 52 generates pattern data related to the first stripe pattern. The pattern data related to the first stripe pattern is transmitted from the pattern generation unit 52 to the light modulation element 32 of the projection device 3. The projection device 3 projects the first stripe pattern to the object W. The imaging device 4 images the object W to which the first stripe pattern is projected (step S1).

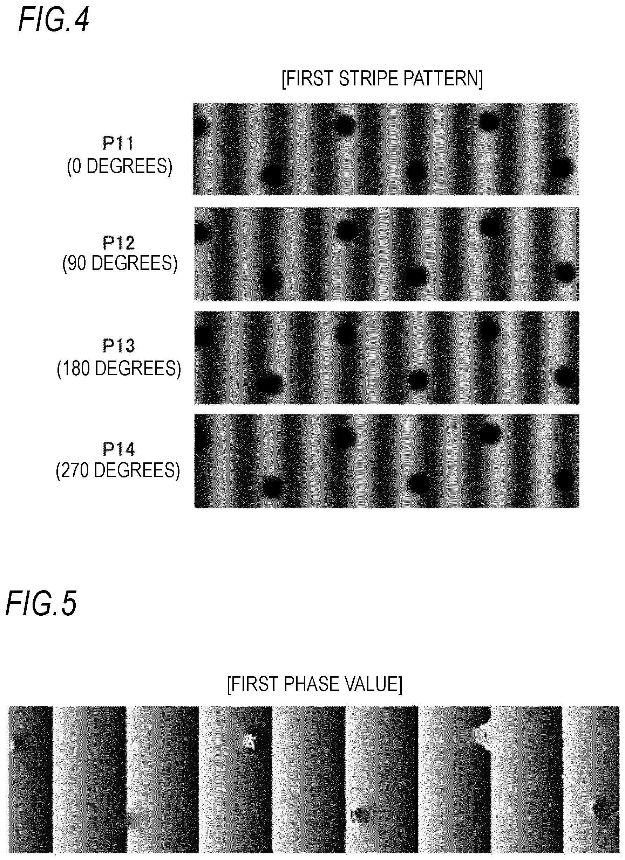

FIG. 4 is a diagram illustrating the first stripe pattern according to the embodiment. As illustrated in FIG. 4, the first stripe pattern is formed by a plurality of stripe patterns subjected to phase shift by the predetermined shift amount from the first reference angle. In the embodiment, the first stripe pattern is formed by four stripe patterns P11, P12, P13, and P14 for which the first reference angle is 0 degrees and the shift amount is 90 degrees. Each of the four stripe patterns P11, P12, P13, and P14 has a sinusoidal brightness distribution. Periods and amplitudes of the four stripe patterns P11, P12, P13, and P14 are the same.

The stripe pattern P11 is a sinusoidal stripe pattern for which 0 degrees which is the first reference angle is the origin. The stripe pattern P12 is a sinusoidal stripe pattern obtained by performing phase shift on the stripe pattern P11 by a shift amount of 90 degrees. The stripe pattern P13 is a sinusoidal stripe pattern obtained by performing phase shift on the stripe pattern P11 by a shift amount of 180 degrees. The stripe pattern P14 is a sinusoidal stripe pattern obtained by performing phase shift on the stripe pattern P11 by a shift amount of 270 degrees.

The projection device 3 sequentially projects each of the stripe patterns P11, P12, P13, and P14 to the object W. The imaging device 4 sequentially images the object W to which the stripe pattern P11 is projected, the object W to which the stripe pattern P12 is projected, the object W to which the stripe pattern P13 is projected, and the object W to which the stripe pattern P14 is projected. The image data acquisition unit 53 acquires image data of the object W to which the stripe pattern P11 is projected (first image data), image data of the object W to which the stripe pattern P12 is projected (first image data), image data of the object W to which the stripe pattern P13 is projected (first image data), and image data of the object W to which the stripe pattern P14 is projected (first image data).

The phase value calculation unit 54 calcualtes the first phase value indicating a phase value of each of a plurality of pixels of the first image data based on luminance of the first image data indicating the images of the object W to which the first stripe patterns (the stripe patterns P11, P12, P13, and P14) are projected (step S2).

FIG. 5 is a diagram illustrating the first phase value according to the embodiment. As illustrated in FIG. 5, the phase value calculation unit 54 can calculate the first phase value indicating the phase value of each of the plurality of pixels of the first image data based on luminance of the first image data indicating the images of the object W to which the first stripe patterns are projected.

The pattern generation unit 52 generates the second stripe patterns. In the embodiment, the pattern generation unit 52 generates pattern data related to the second stripe patterns. The pattern data related to the second stripe patterns are transmitted from the pattern generation unit 52 to the light modulation element 32 of the projection device 3. The projection device 3 projects the second stripe patterns to the object W. The imaging device 4 images the object W to which the second stripe patterns are projected (step S3).

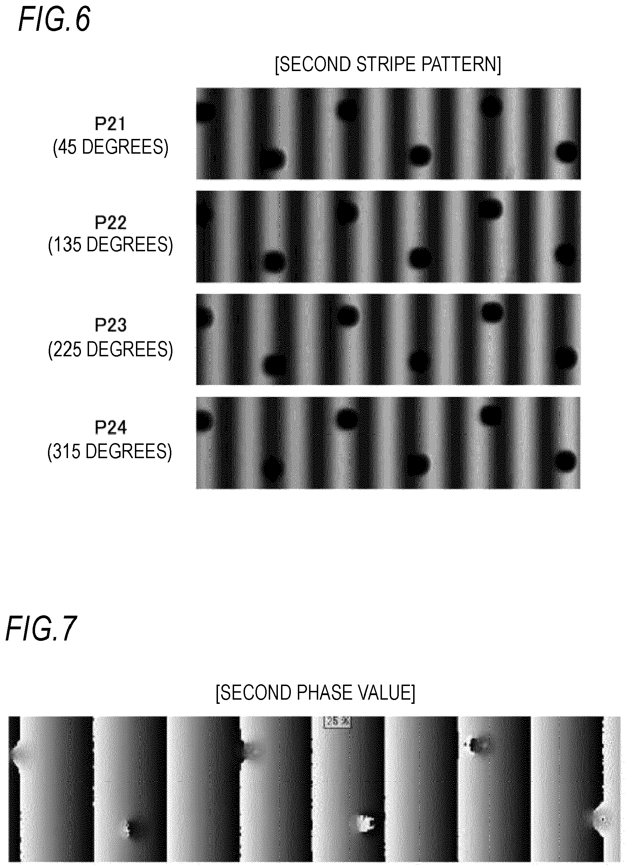

FIG. 6 is a diagram illustrating the second stripe pattern according to the embodiment. As illustrated in FIG. 6, the second stripe pattern is formed by a plurality of stripe patterns subjected to phase shift by the predetermined shift amount from the second reference angle. In the embodiment, the second stripe pattern is formed by four stripe patterns P21, P22, P23, and P24 for which the second reference angle is 45 degrees and the shift amount is 90 degrees. Each of the four stripe patterns P21, P22, P23, and P24 has a sinusoidal brightness distribution. Periods and amplitudes of the four stripe patterns P21, P22, P23, and P24 are the same.

The stripe pattern P21 is a sinusoidal stripe pattern for which 45 degrees which is the second reference angle is the origin. The stripe pattern P22 is a sinusoidal stripe pattern obtained by performing phase shift on the stripe pattern P21 by a shift amount of 90 degrees. The stripe pattern P23 is a sinusoidal stripe pattern obtained by performing phase shift on the stripe pattern P21 by a shift amount of 180 degrees. The stripe pattern P24 is a sinusoidal stripe pattern obtained by performing phase shift on the stripe pattern P21 by a shift amount of 270 degrees.

That is, the stripe pattern P21 is a sinusoidal stripe pattern obtained by performing phase shift on the stripe pattern P11 by 45 degrees which is an advance angle difference between the first and second reference angles. The stripe pattern P22 is a sinusoidal stripe pattern obtained by performing phase shift on the stripe pattern P12 by 45 degrees. The stripe pattern P23 is a sinusoidal stripe pattern obtained by performing phase shift on the stripe pattern P13 by 45 degrees. The stripe pattern P24 is a sinusoidal stripe pattern obtained by performing phase shift on the stripe pattern P14 by 45 degrees. That is, the second stripe patterns (the stripe patterns P21, P22, P23, and P24) are sinusoidal stripe patterns obtained by performing phase shift on the first stripe patterns (the stripe patterns P11, P12, P13, and P14) by 45 degrees which is an advance angle difference between the first and second reference angles. Periods and amplitudes of the stripe patterns P11, P12, P13, P14, P21, P22, P23, and P24 are the same.

The projection device 3 sequentially projects the stripe patterns P21, P22, P23, and P24 to the object W. The imaging device 4 sequentially images the object W to which the stripe pattern P21 is projected, the object W to which the stripe pattern P22 is projected, the object W to which the stripe pattern P23 is projected, and the object W to which the stripe pattern P24 is projected. The image data acquisition unit 53 acquires image data of the object W to which the stripe pattern P21 is projected (second image data), image data of the object W to which the stripe pattern P22 is projected (second image data), image data of the object W to which the stripe pattern P23 is projected (second image data), and image data of the object W to which the stripe pattern P24 is projected (second image data).

The phase value calculation unit 54 calcualtes the second phase value indicating a phase value of each of a plurality of pixels of the second image data based on luminance of the second image data indicating the images of the object W to which the second stripe patterns (the stripe patterns P21, P22, P23, and P24) are projected (step S4).

FIG. 7 is a diagram illustrating the second phase value according to the embodiment. As illustrated in FIG. 7, the phase value calculation unit 54 can calculate the second phase value indicating the phase value of each of the plurality of pixels of the second image data based on luminance of the second image data indicating the images of the object W to which the second stripe patterns are projected.

The collation unit 55 collates the first phase value with the second phase value and specifies noise caused due to secondary reflection. In the embodiment, the collation unit 55 calculates a difference between the first and second phase values (step S5).

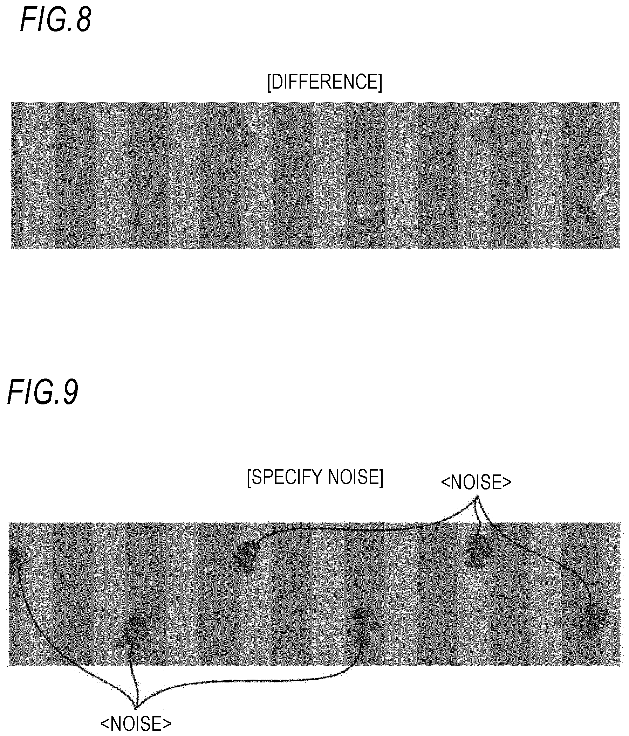

FIG. 8 is a diagram illustrating a difference between the first and second phase values according to the embodiment. FIG. 9 is a diagram illustrating noise specified by the collation unit 55 according to the embodiment.

When noise is not contained in each of the plurality of pixels, a difference between the first and second phase values is a constant value in each of the plurality of pixels. When there is a pixel in which the difference between the first and second phase values is an abnormal value, the collation unit 55 can determine that noise is contained in the pixel indicating that the difference is an abnormal value.

The 3-dimensional shape calculation unit 56 calculates height data of each of a plurality of points on the object W corresponding to each of a plurality of pixels of the first image data based on the first phase value of each of the plurality of pixels of the first image data and calculates a 3-dimensional shape of the object W. The 3-dimensional shape calculation unit 56 calculates the 3-dimensional shape of the object W based on the first phase value of the pixel in which the noise is determined not to be contained. That is, the 3-dimensional shape calculation unit 56 does not calculate height data of points on the object W corresponding to the pixels in which the noise is determined to be contained. The 3-dimensional shape calculation unit 56 calculates only height data of points on the object W corresponding to pixels in which noise is determined not to be contained and calculates the 3-dimensional shape of the object W (step S6).

### Effects

As described above, according to the embodiment, the 3-dimensional measurement apparatus 1 includes the projection device 3 that projects a stripe pattern of a sinusoidal brightness distribution to the object W, the imaging device 4 that images the object W to which the stripe pattern is projected, and the control device 5 that controls the projection device 3 and the imaging device 4. The control device 5 includes the pattern generation unit 52 that generates the first stripe pattern formed by the plurality of the stripe patterns P11, P12, P13, and P14 subjected to phase shift by 90 degrees that is a predetermined shift amount from 0 degrees that is the first reference angle and the second stripe pattern formed by the plurality of the stripe patterns P21, P22, P23, and P24 subjected to phase shift by the shift amount from 90 degrees that is the second reference angle, the image data acquisition unit 53 that acquires first image data indicating an image of the object W to which the first stripe pattern is projected and second image data indicating an image of the object W to which the second stripe pattern is projected, the phase value calculation unit 54 that calculates a first phase value indicating a phase value of each of a plurality of pixels of the first image data and a second phase value indicating a phase value of each of a plurality of pixels of the second image data, the collation unit 55 that collates the first phase value with the second phase value and specifies noise, and the 3-dimensional shape calculation unit 56 that calculates a 3-dimensional shape of the object based on the first phase value in which the noise is determined not to be contained.

According to the embodiment, both the first stripe pattern and the second stripe pattern obtained by performing phase shift on the first stripe pattern by the predetermined shift amount are projected to the object W, the first image data of the object W to which the first stripe pattern is projected and the second image data of the object W to which the second stripe pattern is projected are acquired, the first phase value is calculated from the first image data, and the second phase value is calculated from the second image data. An advance angle phase value indicating a phase value obtained by advancing the first phase value by 45 degrees can be estimated. When noise is not contained in each of the plurality of pixels, an advance angle phase value obtained by advancing the first phase value by 45 degrees matches the second phase value. Accordingly, there is a pixel in which the advance angle phase value does not match the second phase value, the collation unit 55 can determine that noise caused due to secondary reflection is contained in the pixel in which the advance angle phase value does not match the second phase value. The 3-dimensional shape calculation unit 56 rejects the first phase value in which noise is determined to be contained and calculates the 3--dimensional shape of the object W based on the first phase value in which noise is determined not to be contained. Accordingly, deterioration in measurement accuracy of the 3-dimensional shape of the object W caused due to secondary reflection is inhibited.

An advance angle difference indicating a difference between the first and second reference angles is 1/2 of the shift amount. In the embodiment, the shift amount is 90 degrees and the advance angle difference is 45 degrees. The advance angle difference is 1/2 of the shift amount. Therefore, when there is a pixel containing noise, a difference between the advance angle phase value and the second phase value increases. Thus, it is easy to notice that there is noise.

### Other Embodiments

In the above-described embodiment, it is assumed that the advance angle difference difference between the first and second reference angle is 1/2 of the shift amount. The advance angle difference difference between the first and second reference angle may not be 1/2 of the shift amount. For example, when the first stripe pattern is formed by four stripe patterns P11, P12, P13, and P14 in which the first reference angle is 0 degrees and the shift amount is 90 degrees, the second stripe pattern may be formed by four stripe patterns P21, P22, P23, and P24 in which, for example, the second reference angle is 10 degrees and the shift amount is 90 degrees.

In the above-described embodiment, it is assumed that the first stripe pattern is formed by four stripe patterns P11, P12, P13, and P14 in which the first reference angle is 0 degrees and the shift amount is 90 degrees, the second stripe pattern is formed by four stripe patterns P21, P22, P23, and P24 in which, for example, the second reference angle is 45 degrees and the shift amount is 90 degrees. For example, the first stripe pattern may be formed by three stripe patterns in which the first reference angle is 0 degrees and the shift amount is 120 degrees and the second stripe pattern may be formed by three stripe patterns in which the second reference angle is 30 degrees and the shift amount is 120 degrees.

### REFERENCE SIGNS LIST

- 1: 3-dimensional measurement apparatus
- 2: Stage
- 3: Projection device
- 4: Imaging device
- 5: Control device
- 31: Light source
- 32: Light modulation element
- 33: Projection optical system
- 41: Imaging optical system
- 42: Image sensor
- 51: Input/output unit
- 52: Pattern generation unit
- 53: Image data acquisition unit
- 54: Phae value calculation unit
- 55: Collation unit
- 56: 3-dimensional shape calculation unit
- W: Object

## Claims

1. A 3-dimensional measurement apparatus comprising:
a projection device configured to project a stripe pattern of a sinusoidal brightness distribution to an object;
an imaging device configured to image the object to which the stripe pattern is projected; and
a control device configured to control the projection device and the imaging device,
wherein the control device includes:
a pattern generation unit that generates: a first stripe pattern formed by a plurality of the stripe patterns subjected to phase shift by a predetermined shift amount from a first reference angle; and a second stripe pattern formed by a plurality of the stripe patterns subjected to phase shift by the shift amount from a second reference angle;
an image data acquisition unit that acquires: first image data indicating an image of the object to which the first stripe pattern is projected; and second image data indicating an image of the object to which the second stripe pattern is projected;
a phase value calculation unit that calculates: a first phase value indicating a phase value of each of a plurality of pixels of the first image data; and a second phase value indicating a phase value of each of a plurality of pixels of the second image data;
a collation unit that collates the first phase value with the second phase value and specifies noise, and
a 3-dimensional shape calculation unit that calculates a 3-dimensional shape of the object based on the first phase value in which the noise is determined not to be contained.

2. The 3-dimensional measurement apparatus according to claim 1, wherein a difference between the first and second reference angles is 1/2 of the shift amount.

3. The 3-dimensional measurement apparatus according to claim 2,
wherein the first stripe pattern is formed by four stripe patterns for which the first reference angle is 0 degrees and the shift amount is 90 degrees, and
wherein the second stripe pattern is formed by four stripe patterns for which the second reference angle is 45 degrees and the shift amount is 90 degrees.

4. The 3-dimensional measurement apparatus according to claim 1, wherein the collation between the first and second phase values includes calculation of a difference between the first and second phase values of same pixels of the first image data and the second image data.

5. A 3-dimensional measurement method comprising:
projecting, to an object, a first stripe pattern formed by a plurality of stripe patterns of a sinusoidal brightness distribution subjected to phase shift by a predetermined shift amount from a first reference angle;
projecting, to an object, a second stripe pattern formed by the plurality of stripe patterns of the sinusoidal brightness distribution subjected to phase shift by the predetermined shift amount from a second reference angle;
acquiring first image data indicating an image of the object to which the first stripe pattern is projected;
acquiring second image data indicating an image of the object to which the second stripe pattern is projected;
calculating a first phase value indicating a phase value of each of a plurality of pixels of the first image data;
calculating a second phase value indicating a phase value of each of a plurality of pixels of the second image data;
collating the first phase value with the second phase value and specifying noise; and
calculating a 3-dimensional shape of the object based on the first phase value in which the noise is determined not to be contained.
